# EUROPÄISCHE PATENTSCHRIFT

(11) **EP 0 998 380 B1**
(45) Veröffentlichungstag und Bekanntmachung des Hinweises auf die Patenterteilung: **05.12.2001**
(21) Anmeldenummer: 98942590.5
(22) Anmeldetag: 21.07.1998
(51) Int. Cl.: B29C 45/50, B29C 45/07

(54) **SPRITZGIESSEINHEIT FÜR EINE SPRITZGIESSMASCHINE**
INJECTION MOULDING UNIT FOR AN INJECTION MOULDING MACHINE
UNITE D'INJECTION POUR MACHINE A MOULER PAR INJECTION

(30) Priorität: 24.07.1997 DE 19731833
(43) Veröffentlichungstag der Anmeldung: 10.05.2000
(73) Patentinhaber: Hehl, Karl, 72290 Lossburg (DE)
(72) Erfinder: Hehl, Karl, 72290 Lossburg (DE)
(74) Vertreter: Reinhardt, Harry, Dipl.-Ing.
(86) Internationale Anmeldenummer: EP9804574
(87) Internationale Veröffentlichungsnummer: WO9904947

(56) Entgegenhaltungen:
- EP-A- 0 752 303
- WO-A-97/18938
- US-A- 3 806 294
- US-A- 5 421 712

## Beschreibung

Die Erfindung betrifft eine Spritzgießeinheit für eine Spritzgießmaschine zur Verarbeitung plastifizierbarer Massen wie Kunststoffe, keramische Massen oder andere pulverförmige Massen nach dem Oberbegriff des Anspruches 1.

Eine derartige Spritzgießeinheit ist aus der EP 0 752 303 A1 bekannt. Dort werden eine elektromechanische Einspritzeinheit zum Einspritzen der plastifizierbaren Masse in den Formhohlraum einer in der Formschließeinheit eingespannten Form und ein elektromechanischer Rotationsmotor zum Drehen eines Fördermittels eingesetzt. Die Einspritzeinheit stützt sich an einem Abstützelement ab, das mit dem Trägerblock über Holme verbunden ist. Diese Holme dienen einer Einspritzbrücke zur Führung. Das Fördermittel und die Kugelrollspindel der Einspritzeinheit liegen koaxial zueinander. Rotationsmotor und Einspritzmotor sind beide an der Einspritzbrücke angeordnet und werden gemeinsam mit dieser bewegt. Sie übertragen ihr Antriebsmoment auf koaxial zueinander und koaxial zur Spritzachse angeordnete Antriebselemente. Sowohl Förderschnecke als auch Kugelrollspindel sind drehbeweglich an der Einspritzbrücke in Lagern gehalten. Dadurch wird zwar erreicht, daß keine Radialkräfte von der Einspritzbrücke auf die Holme übertragen werden, was dort zur Erfassung der Reaktionskräfte wesentlich ist, allerdings wird ein beträchtlicher Lagerungsaufwand für die drehbewegliche Lagerung von Fördermittel und Spindel betrieben. Da die Lager nicht in einem Gehäuse untergebracht sind, können sie nur schwerlich gegen Verschmutzung geschützt werden. Da die zur Axialbewegung der Einspritzbrücke erforderliche Kraft über eine Verjüngung der Spindel, Lager und eine Spindelhülse wieder auf die Schnecke übertragen wird, müssen viele verschiedene Bauteile aufwendig zusammengebracht werden, so daß ein modularer Aufbau dieser Einheit nicht zu verwirklichen ist. Die Lagerung wird dabei so vorgenommen, daß die Lager, die die verhältnismäßig hohen Kräfte bei Axialbewegung der Schnecke aufnehmen, innen liegen, während die Lager, die die im Verhältnis dazu geringeren Dosierkräfte aufnehmen, außen liegen. Insofern ist hier die im wesentlichen parallele Anordnung der Lager zueinander nachteilig.

Aus der DE 43 44 335 A1 ist es ferner bekannt, elektromechanische Antriebe zur Durchführung der Drehbewegung der Schnecke und zur Durchfürhung der Axialbewegung der Schnecke mit ihren Achsen fluchtend zur Achse der Schnecke anzuordnen. Um dies zu ermöglichen, muß mindestens einer der Motoren ein Hohlwellenmotor sein, so daß trotz der kompakten Weise ein entsprechender Aufwand hierfür zu treiben ist.

Ausgehend von diesem Stand der Technik liegt der vorliegenden Erfindung die Aufgabe zugrunde, auf einfache Weise eine kompakte Kopplung der Antriebselemente zum Dosieren und Einspritzen an einer Spritzgießeinheit zu schaffen.

Diese Aufgabe wird durch die Merkmale des Anspruches 1 gelöst.

Gegenüber den bekannten Ausführungsformen werden nun nicht mehr die drehbeweglichen Lagerungen gesondert jeweils für sich gelagert, stattdessen wird die die Übertragung der Axialkräfte ermöglichende Axial-Lagerung nun unmittelbar zwischen den beiden Antriebselementen vorgenommen. Dadurch kann einerseits ein Lagerelement eingespart werden, andererseits schafft die dadurch gewonnene örtliche Nähe die baulichen Voraussetzungen dafür, die Antriebselemente in einem Gehäuse anzuordnen (Anspruch 4), das diese Elemente vor Fremdeinflüssen wirksam schützt. Ebenso werden damit aber auch die Voraussetzungen geschaffen, daß ein weitestgehend modularer Aufbau mit vielfach baugleichen Teilen möglich ist. Durch die unmittelbare Anordnung des Axial-Lagerelements zwischen dem ersten und dem weiteren Antriebselement ist einerseits ein platzsparender Aufbau möglich, andererseits können dort, wo die hohen Axialkräfte bei der Axialbewegung der Schnecke auftreten, größere Lager vorgesehen werden, während für die Dosierkräfte kleinere Lager einsetzbar sind. Dies wird den tatsächlich auftretenden Kräften eher gerecht als dies im Stand der Technik üblich ist.

Obwohl insofern auch zur Erzielung einer symmetrischen Belastung der Spritzgießeinheit gleiche Teile weitestgehend symmetrisch zur Spritzachse angeordnet sind, kann bei einer Ausgestaltung nach den Ansprüchen 7 bis 9 eine Kraftuntersetzung wirksam vorgenommen werden, in dem ein Planetenrollentrieb dem Linearbewegungsmittel zugeordnet wird. Um diesen Antrieb vor äußeren Einflüssen zu schützen, kann dieser von einem Rohr umgeben sein, so daß sich äußerlich das Erscheinungsbild einer Kolben-Zylinder-Einheit ergibt.

Im folgenden wird die Erfindung anhand eines in den Figuren dargestellten Ausführungsbeispieles näher erläutert. Es zeigen:
- Fig. 1: Eine Seitenansicht einer auf einem Maschinenfuß abgestützten und an eine Form angelegten Spritzgießeinheit in Seitenansicht,
- Fig. 2: einen vergrößerten Schnitt gemäß Linie 2-2 von Fig. 3,
- Fig. 3: einen vergrößerten Schnitt nach Linie 3-3 von Fig. 1, Fig. 4 einen abgewinkelten Schnitt nach Linie 4-4 von Fig. 3,
- Fig. 5: eine Darstellung gemäß Fig. 2 in einer weiteren Ausführungsform.

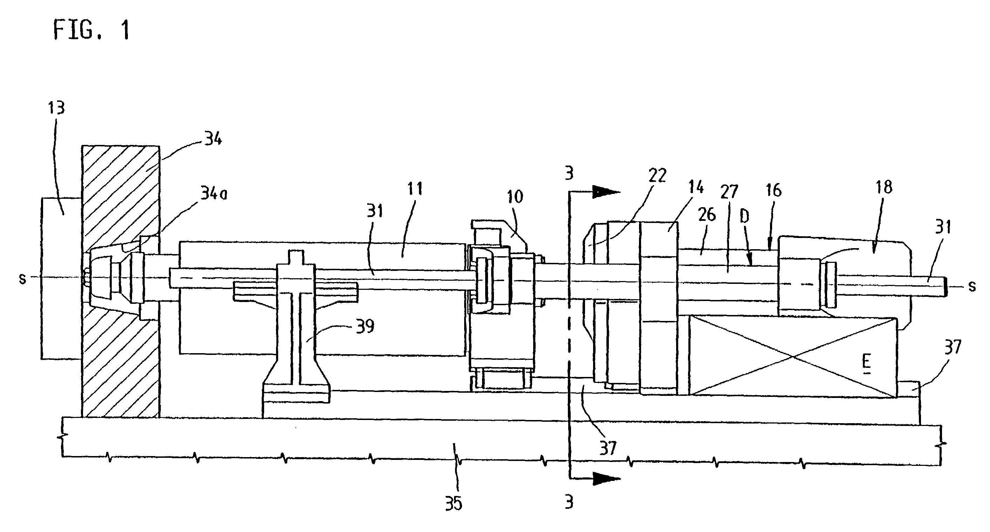

Die in Fig. 1 schematisch dargestellte Spritzgießeinheit ist Bestandteil einer Spritzgießmaschine und insofern auf dem Maschinenfuß 35 dieser Spritzgießmaschine angeordnet. Sie taucht dabei in eine Durchtrittsöffnung 34a eines stationären Formträgers 34 ein, an dem auf der linken Seite ein Teil der Form 13 sichtbar ist. Die Spritzgießeinheit selbst dient bei einer Spritzgießmaschine zur Verarbeitung plastifizierbarer Massen im wesentlichen zum Einspritzen dieser Massen wie z.B. von Kunststoffen, keramischen Massen oder anderen pulvrigen Massen in den Formhohlraum der Form 13.

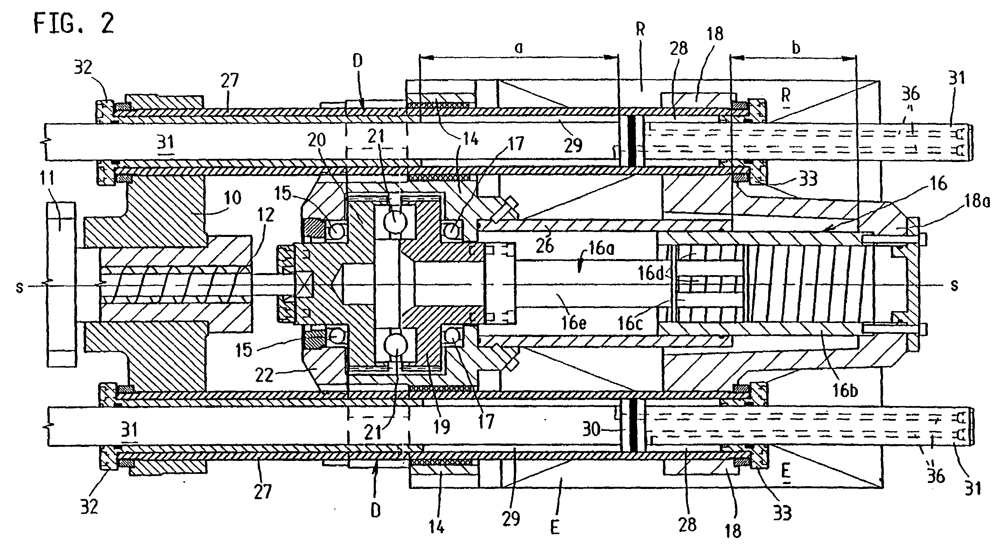

Gemäß Fig. 1 besitzt die Spritzgießmaschine einen Trägerblock 10 zur Aufnahme eines Plastifizierzylinders 11. Im Plastifizierzylinder 11 ist entlang der Spritzachse s-s das in Fig. 2 dargestellte Fördermittel angeordnet. Dieses Fördermittel 12 dient zum Einspritzen der plastifizierbaren Massen in die Form 13. Eine Einspritzbrücke 14 ist über Holme 31 auf Zylindern 27 axial in Richtung der Spritzachse s-s beweglich angeordnet. An dieser Einspritzbrücke 14 ist gemäß Fig. 2 das Fördermittel 12 drehbeweglich über wenigstens ein Lagerelement 15 gelagert. Die Einspritzbrücke 14 wird über eine elektromechanische Einspritzeinheit 16 axial bewegt. Fig. 2 verdeutlicht insofern die Wirkweise dieser Einspritzeinheit 16, deren Linearbewegungsmittel 16a drehbeweglich an der Einspritzbrücke über wenigstens ein Lagerelement 17 gelagert ist.

Am rechtsseitigen Ende der Spritzgießeinheit ist ein Abstützelement 18 zur drehfesten Abstützung des mit dem Linearbewegungsmittel 16a zusammenwirkenden Elements 16b vorgesehen. Ein Einspritzmotor E dreht das Linearbewegungsmittel 16a mittels einem zu diesem koaxialen ersten Antriebselement 19. In Fig. 2 rechts oben ist ein elektromechanischer Rotationsmotor R dargestellt, der dafür bestimmt ist, die Rotationsbewegung des Fördermittels 12 aufzubringen. Dies erfolgt mittels eines weiteren Antriebselements 20, das koaxial zur Mittelachse des Fördermittels 12 als auch koaxial zum ersten Antriebselement 19 ist. Damit liegen Fördermittel 12, erstes 19 und weiteres Antriebselement 20 sowie das Linearbewegungsmittel 16a der Einspritzeinheit auf einer Achse, der Spritzachse s-s.

Während die Lagerelemente 15 und 17 im wesentlichen dafür bestimmt sind, die beim Dosieren auftretende Radialbewegung des Antriebselements zuzulassen, ist zwischen den beiden Antriebselementen 19,20 unmittelbar ein Axiallagerelement 21 als Kraftübertragungselement zur Übertragung der Kräfte bei der Axialbewegung des Linearbewegungsmittels 16a vorgesehen. Wird das Linearbewegungsmittel 16a bewegt, so geht der Kraftfluß vom Linearbewegungsmittel auf das mit diesem Linearbewegungsmittel verbundene Antriebselement 19 und von diesem über das Axial-Lagerelement 21 auf das weitere Antriebselement 20 und von dort auf die Fördermittel 12. Dieses Axiallagerelement 21 muß insofern die verhältnismäßig hohen Axialkräfte übertragen. Gleichzeitig ermöglicht es, die beiden Antriebselemente 19,20 unabhängig voneinander zu drehen. Dies wird notwendig während der Plastifizierung von Material, da bei rotierendem Fördermittel 12 gleichzeitig eine axiale kraftgeregelte Bewegung des Fördermittels 12 vollzogen werden muß. In diesem Fall können dann auch beide Antriebselemente 19, 20 gleichzeitig, jedoch unabhängig voneinander bewegt werden. Dies wird dadurch möglich, daß das Axial-Lagerelement 21 zugleich als Trennmittel zur Entkopplung der Drehbewegungen der Antriebselemente 19,20 ausgebildet ist.

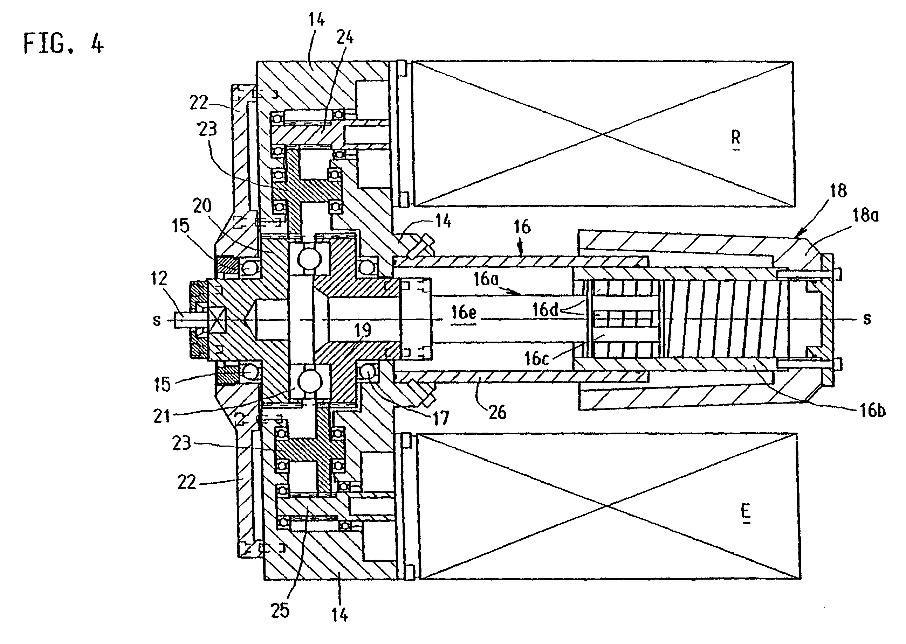

Fig. 2 verdeutlicht, daß die verschiedenen Lagerelemente 15,17 und das Axial-Lagerelement 21 nahezu seriell hintereinander angeordnet sind. Dennoch ist durch die unmittelbare Zwischenschaltung des Axial-Lagerelements 21 zwischen die beiden Antriebselemente 19,20 eine kompakte Bauweise möglich, so daß das erste 19 und das weitere Antriebselement 20 gemeinsam in einem in der Einspritzbrücke 14 gebildeten Gehäuse angeordnet werden können. Dieses Gehäuse ist durch den Gehäusedeckel 22 in Richtung auf den Trägerblock verschlossen, wie am besten Fig. 4 verdeutlicht. Die Antriebselemente 19,20 sind hinsichtlich ihres Durchmessers identisch und im Ausführungsbeispiel Zahnräder. Über Zwischenzahnräder 23 können die Antriebselemente 19,20 von den Abtriebszahnrädern 24,25 des Einspritzmotors E bzw. des Rotationsmotors R angetrieben werden. Einspritzmotor als auch Rotationsmotor sind an der Einspritzbrücke 14 befestigt und werden mit der Einspritzbrücke 14 bewegt. Gemäß Fig. 4 ermöglicht dieser Aufbau nicht nur den Schutz der beiden Getriebe in einem gemeinsamen Gehäuse. Ferner werden hierdurch auch die weitestgehenden Voraussetzungen für die Verwendung baugleicher Teile erzielt. So zeigt Fig. 4, daß die beiden Zwischenzahnräder 23 baugleich sind und daß das in der Einspritzbrücke gebildete und zur Spritzachse s-s symmetrische Gehäuse diese beiden Zwischenzahnräder 23 an - symmetrisch - derselben Stelle aufnimmt. Die beiden Zwischenzahnräder 23 sind dabei lediglich zueinander um 180° gedreht und auch selbst wiederum symmetrisch zur Spritzachse s-s gelagert.

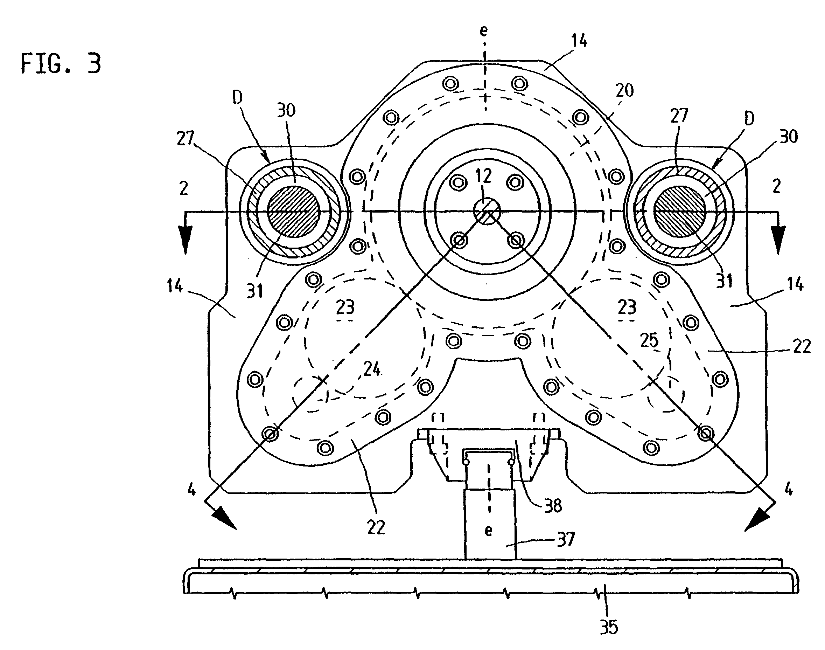

Ebenso sind Einspritzmotor E und Rotationsmotor R weitgehend baugleich und beide symmetrisch zu einer durch die Spritzachse gelegten Ebene e-e angeordnet. Sie befinden sich im Ausführungsbeispiel, wie Fig. 3 verdeutlicht, unter den Holmen 31 und im wesentlichen innerhalb einer Vertikalprojektion einer zwischen den beiden Holmen 31 aufgespannten Fläche. Es versteht sich jedoch von selbst, daß hier auch andere Anordnungen um die Spritzachse herum möglich sind.

Das Linearbewegungsmittel 16a der Einspritzeinheit 16 weist einen Spindelkopf 16c auf. Dieser Spindelkopf taucht in eine Gewindehülse ein, die das mit dem Linearbewegungsmittel 16a zusammenwirkende Element 16b bildet. Die Gewindehülse ist gemäß Fig. 2 am Abstützelement 18 drehfest abgestützt. Zwischen Spindelkopf 16c und Gewindehülse sind mehrere mit diesem zusammenwirkende Planeten 16d angeordnet, so daß hier eine weitere Untersetzung möglich ist. Dadurch können die beiden Motoren, Einspritzmotor E einerseits und Rotationsmotor R andererseits, mit gleichen Grenzdrehzahlen betrieben werden, wobei einerseits durch das durch die Zahnräder gebildete Getriebe eine Untersetzung erfolgt, die zur Aufbringung hoher Kräfte über den Planetenrollentrieb weiter untersetzbar ist.

Bei dem elektromechanischen Antrieb der Einspritzeinheit kann grundsätzlich ein Zusammenwirken von Spindel und Spindelmutter vorgesehen werden. Im Ausführungsbeispiel wird jedoch eine Ausführungsform gewählt, bei der eine Stange 16e einen Spindelkopf 16c besitzt, der bei Rotation gemeinsam mit den Planeten innerhalb der Gewindehülse 16b bewegt wird. Um Stange, Planeten und Spindelkopf vor äußeren Einflüssen zu schützen, ist die Stange 16e koaxial von einem drehfest an der Einspritzbrücke 14 abgestützten Rohr 26 umgeben. Dieses Rohr taucht in jeder Stellung der Einspritzeinheit, dargestellt durch den maximalen Einspritzhub b (Fig. 2) in eine topfartige Anformung 18a des Abstützelements 18 ein.

Die Spritzgießeinheit selbst muß beim Einspritzen auch an die Form angelegt werden. Dies erfolgt über eine hydraulische Kolben-Zylinder-Einheit D, deren Zylinder 27 auf den stationären als Kolbenstangen ausgebildeten Holmen 31 axial beweglich sind. Die Zylinder 27 bilden mit Trägerblock 10 und Abstützelement 18 einen Rahmen. Der Rahmen ist auf den Holmen beweglich abgestützt, die ihrerseits unter anderem auch über Träger 39 auf dem Maschinenfuß abgestützt sind. Ebenso ist der Trägerblock 10 auf einer Führungsschiene 37 abgestützt, die gleichsam auch gemäß Fig. 3 der Einspritzbrücke als zusätzliche Führung neben den Holmen 31 dient. Hierzu besitzt die Einspritzbrücke 14 einen Führungswagen 38, der die mittige Führungsschiene 37 übergreift.

In dem Zylinder, Trägerblock und Abstützelement umfassenden Rahmen ist der Trägerblock 10 im Bereich der vorderen Zylinderdeckel 32 und das Abstützelement 18 im Bereich des hinteren Zylinderdeckels 33 festgelegt. Die Einspritzbrücke 14 ist zwischen Trägerblock 10 und Abstützelement 18 auf den Zylindern 27 der Kolben-Zylinder-Einheit D axial beweglich geführt und gegen Rotation gesichert. Im Ausführungsbeispiel ist die Kolben-Zylinder-Einheit hydraulisch angetrieben. Es versteht sich von selbst, daß hier auch andere Antriebsmöglichkeiten, wie z.B. elektromechanische Antriebe möglich sind, wobei lediglich sichergestellt werden sollte, daß die Außenseite dieser Antriebseinheit eine Führungsfunktion hat. Diese Kolben-Zylinder-Einheit D läßt sich auch als Führungszylinder-Einheit ansprechen.

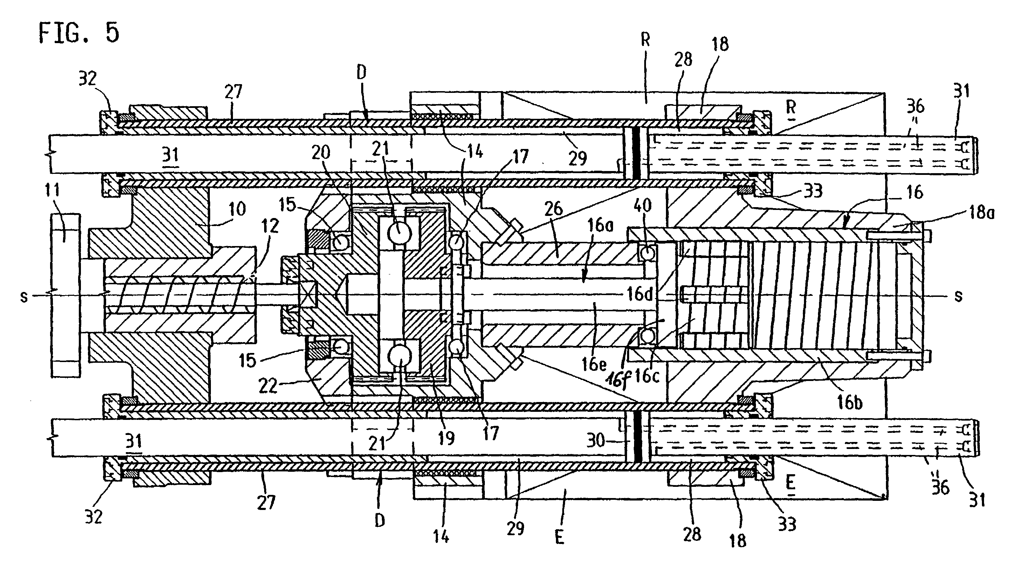

Fig. 5 zeigt eine weitere Ausführungsform. Zur Erleichterung des Verständnisses wurden dabei die Bezugszeichen beibehalten, obwohl ein Vergleich mit der Fig. 2 zeigt, daß zumindest das Linearbewegungsmittel 16a und hier insbesondere die Stange 16e sowie das Rohr 26 anders dimensioniert sind. Ergänzend findet sich ein weiteres Axial-Lagerelement 40 zwischen dem Rohr 26 und dem Element 16b. Schließlich wurde aus dem bisherigen Radial-Lager 17 ein Axial-Lager.

Diese Änderungen haben die Aufgabe, die Einspritzeinheit 16 zu entlasten. Wie insbesondere im ersten Ausführungsbeispiel wird vom Einspritzmotor das erste Antriebselement 19 angetrieben. Dies führt zu einer Rotation der Stange 16e und zu einer zugehörigen Bewegung des Spindelkopfs 16c und der Planeten 16d, die infolge der Rotation sich relativ zur Gewindehülse 16b bewegen. Dabei taucht hier nun das Rohr 26 in die Gewindehülse, das mit dem Linearbewegungsmittel 16a zusammenwirkende Element 16b ein. Gewindehülse und Rohr 26 stehen miteinander mittelbar über ein Axial-Lagerelement 40 in Verbindung. Dies führt nun dazu, daß die bei Betätigung des Einspritzmotors E auftretenden Kräfte nicht wie bisher über die Stange 16e auf das Antriebselement 19 übertragen werden. Stattdessen werden die Kräfte von der Gewindehülse (Element 16b) über die Planeten 16d auf den Spindelkopf übertragen. Der Spindelkopf weist einen Bund 16f auf, der auf das das Axial-Lagerelement 40 wirkt und die Kräfte auf das Rohr 26 überträgt. Das Rohr 26 übermittelt die Kräfte dann unter Zwischenschaltung der Einspritzbrücke über das Lagerelement 17 auf das erste Antriebselement 19, von dem die Kräfte dann wie im ersten Ausführungsbeispiel über Axial-Lagerelement 21 und weiteres Antriebselement 20 auf die Förderschnecke 12 übertragen werden.

Zwar wird hierzu nun das Rohr 26 stärker dimensioniert, während die Stange 16e kleiner dimensioniert werden kann, was ein Vergleich zwischen Fig. 2 und Fig. 5 verdeutlicht. Dies hat den Vorteil, daß die Stange 16e des Linearbewegungsmittels 16a nicht mehr auf die Kraftübertragung sondern nur noch auf die Übertragung der Rotation dimensioniert werden muß. Dadurch werden die zu bewegenden Massen und damit die Trägheitsmomente verringert. Da diese Trägheitsmomente bei Betätigung des Einspritzmotors diesen stärker belasten als die bei jeder Bewegung der Einspritzbrücke mitzubewegenden Motoren (Einspritzmotor E, Rotationtsmotor R), wird die Ausgestaltung des Rohrs 26 als Kraftübertragungsrohr gerne in Kauf genommen.

Beide Ausführungsformen haben damit eine symmetrische Anordnung der Bauelemente zur Spritzachse s-s gemeinsam. Vor allem wird es aber möglich, die Einspritzkraft unmittelbar zentrisch und koaxial zum Fördermittel 12 aufzubringen.

Die Spritzgießeinheit arbeitet in diesen Ausführungsformen folgendermaßen: Vor dem eigentlichen Einspritzvorgang wird die Spritzgießeinheit durch die Kolben-Zylinder-Einheit D an die Form 13 angelegt. Dabei wird der Zylinderraum 29 über eine der Bohrungen 36 mit Hydraulikmedium beaufschlagt. Da Kolbenstange und Ringkolben 30 stationär sind, bewegt sich dadurch die gesamte Einheit in Richtung auf die Form 13. Im nächsten Schritt, dem Dosieren, wird die Förderschnecke 12 durch den Rotationsmotor R über das weitere Antriebselement 20 gedreht. Dabei gelangt plastifiziertes Material in den Raum vor dem Fördermittel, wobei allmählich das Fördermittel 12 zurückweicht. Die beiden Antriebselemente 19 und 20 sind dabei über das Axial-Lagerelement entkoppelt. Anstelle dieses Axial-Lagerelements kann auch ein Kegelrollen- Pendelrollenlager oder ähnliches verwendet werden.

Ist eine entsprechende Menge an plastifiziertem Material vor der Förderschnecke dosiert worden, wird über den Einspritzmotor E das erste Antriebselement 19 betätigt. Bei der Rotation dieses Antriebselements 19 wird gleichzeitig das Linearbewegungsmittel 16a bewegt. Dabei rotiert der am Ende der Stange 16e befindliche Spindelkopf 16c zwischen den Planeten 16d, was zu einer Relativbewegung von Spindelkopf 16c und Planeten 16d gegenüber der drehfest am Abstützelement gelagerten Gewindehülse, dem mit dem Linearbewegungsmittel 16a zusammenwirkenden Element 16b, führt. Ist das plastifizierte Material eingespritzt, beginnt wieder der Dosiervorgang.

Um schließlich die Spritzgießeinheit wieder von der Form abzusetzen, wird über eine der Bohrungen 36 nun der rechts vom Ringkolben 30 befindliche Zylinderraum 28 beaufschlagt, was zu einem Zurückziehen der Spritzgießeinheit führt.

## Patentansprüche

1. Spritzgießeinheit für eine Spritzgießmaschine zur Verarbeitung von Kunststoffen und anderen plastifizierbaren Massen mit
- einem Trägerblock (10) zur Aufnahme eines Plastifizierzylinders (11),
- einem im Plastifizierzylinder (11) entlang einer Spritzachse (s-s) angeordneten Fördermittel (12) zum Einspritzen der plastifizierbaren Masse in eine Form (13),
- einer axial entlang der Spritzachse (s-s) beweglichen Einspritzbrücke (14), an der das Fördermittel (12) drehbeweglich über wenigstens ein Lagerelement (15) gelagert ist,
- einer elektromechanischen Einspritzeinheit (16) zum axialen Bewegen der Einspritzbrücke (14), wobei ein Linearbewegungsmittel (16a) der Einspritzeinheit (16) drehbeweglich an der Einspritzbrücke (14) über wenigstens ein Lagerelement (17) gelagert ist,
- einem Abstützelement (18) zur drehfesten Abstützung des mit dem Linearbewegungsmittel (16a) zusammenwirkenden Elements (16b),
- einem Einspritzmotor (E), der das Linearbewegungsmittel (16a) mittels einem zu diesem koaxialen ersten Antriebselement (19) dreht,
- einem elektromechanischen Rotationsmotor (R), der das Fördermittel (12) mittels einem zum Fördermittel als auch zum ersten Antriebselement (19) koaxialen weiteren Antriebselement (20) dreht,
- Kraftübertragungselementen, die wenigstens ein Axial-Lagerelement (21) aufweisen, zur Übertragung der Axialbewegung des Linearbewegungsmittels (16a) auf das Fördermittel (12),
**dadurch gekennzeichnet, daß** das Axial-Lagerelement (21) als Kraftübertragungselement unmittelbar zwischen dem ersten (19) und dem weiteren Antriebselement (20) angeordnet ist.

2. Spritzgießeinheit nach Anspruch 1, **dadurch gekennzeichnet, daß** das Axial-Lagerelement (21) als Trennmittel zur Entkopplung der Drehbewegungen der Antriebselemente (19, 20) ausgebildet ist.

3. Spritzgießeinheit nach Anspruch 1, **dadurch gekennzeichnet, daß** Einspritzmotor (E) und Rotationsmotor (R) weitgehend baugleich sind, und daß diese beiden Motoren symmetrisch zu einer durch die Spritzachse gelegten Ebene (e-e) angeordnet sind.

4. Spritzgießeinheit nach Anspruch 1, **dadurch gekennzeichnet, daß** das erste (19) und das weitere Antriebselement (20) gemeinsam in einem in der Einspritzbrücke (14) gebildeten Gehäuse angeordnet sind.

5. Spritzgießeinheit nach Anspruch 1, **dadurch gekennzeichnet, daß** die hinsichtlich ihres Durchmessers nahezu identischen Antriebselemente (19,20) Zahnräder sind, die vorzugsweise über Zwischenzahnräder (23) von den Abtriebsrädern (24,25) des Einspritzmotors (E) bzw. Rotationsmotors (R) antreibbar sind.

6. Spritzgießeinheit nach Anspruch 5, **dadurch gekennzeichnet, daß** die beiden Zwischenzahnräder (23) baugleich sind und in einem in der Einspritzbrücke (14) gebildeten, zur Spritzachse (s-s) symmetrischen Gehäuse um etwa 180° zueinander gedreht symmetrisch zur Spritzachse (s-s) gelagert sind.

7. Spritzgießeinheit nach Anspruch 1, **dadurch gekennzeichnet, daß** das Linearbewegungsmittel (16a) der Einspritzeinheit (16) einen Spindelkopf (16c) aufweist, der in das als Gewindehülse ausgebildete und mit dem Linearbewegungsmittel zusammenwirkende Element (16b) eintaucht.

8. Spritzgießeinheit nach Anspruch 7, **dadurch gekennzeichnet, daß** eine Stange (16e) des Linearbewegungsmittels (16a) den Spindelkopf (16c) trägt und koaxial von einem drehfest an der Einspritzbrücke (14) abgestützten Rohr (26) umgeben ist, das in jeder Stellung der Einspritzeinheit (16) in das Abstützelement (18) eintaucht.

9. Spritzgießeinheit nach Anspruch 7, **dadurch gekennzeichnet, daß** das Linearbewegungsmittel (16a) koaxial von einem drehfest an der Einspritzbrücke (14) abgestützten Rohr (26) umgeben ist, das in das als Gewindehülse ausgebildete und mit dem Linearbewegungsmittel (16a) zusammenwirkende Element (16b) eintaucht, wobei die entstehenden Axialkräfte von der Gewindehülse über Planeten (16d) und den Spindelkopf (16c) auf ein Axial-Lagerelement (40) und von diesem auf das Rohr (26) übertragen werden (Fig. 5).

10. Spritzgießeinheit nach Anspruch 1, **dadurch gekennzeichnet, daß** eine hydraulische Kolben-Zylinder-Einheit (D) zum Anlegen der Spritzgießeinheit an der Form (13) vorgesehen ist, deren Zylinder (27) auf den stationären, als Holmen (31) ausgebildeten Kolbenstangen axial beweglich sind und mit Trägerblock (10) und Abstützelement (18) einen Rahmen bilden.

11. Spritzgießeinheit nach Anspruch 10, **dadurch gekennzeichnet, daß** der Trägerblock (10) im Bereich der vorderen Zylinderdeckel (32) und das Abstützelement (18) im Bereich der hinteren Zylinderdeckel (33) festgelegt ist, und daß die Einspritzbrücke (14) zwischen Trägerblock (10) und Abstützelement (18) auf den Zylindern (27) der Kolben-Zylinder-Einheit (D) axial beweglich und rotatorisch abgestützt ist.

## Claims

1. Injection moulding unit for an injection moulding machine to process plastics materials and other plasticisable compounds, having
- a carrier block (10) to accommodate a plasticising cylinder (11),
- a conveying means (12), disposed in the plasticising cylinder (11) along an injection axis (s-s), to inject the plasticisable compound into a mould (13),
- an injection bridge (14) which is axially displaceable along the injection axis (s-s), and on which the conveying means (12) is rotatably mounted via at least one bearing element (15),
- an electromechanical injection unit (16) to move the injection bridge (14) axially, wherein a means of linear movement (16a) of the injection unit (16) is rotatably mounted on the injection bridge (14) via at least one bearing element (17),
- a supporting element (18) for non-rotatably supporting the element (16b) which co-operates with the means of linear movement (16a),
- an injection motor (E), which turns the means of linear movement (16a) by means of a first driving element (19) coaxial relative thereto,
- an electromechanical rotary motor (R), which turns the conveying means (12) by means of an additional driving element (20) coaxial relative to the conveying means and also relative to the first driving element (19),
- force-transmission elements which have at least one axial bearing element (21), for transmitting the axial movement of the means of linear movement (16a) to the conveying means (12),
**characterised in that** the axial bearing element (21) is disposed directly between the first driving element (19) and the additional driving element (20) as a force-transmission element.

2. Injection moulding unit according to claim 1, **characterised in that** the axial bearing element (21) is designed as a means of separation for uncoupling the rotational movements of the driving elements (19, 20).

3. Injection moulding unit according to claim 1, **characterised in that** the injection motor (E) and the rotary motor (R) are largely structurally identical, and **in that** these two motors are disposed symmetrically relative to a plane (e-e) which goes through the injection axis.

4. Injection moulding unit according to claim 1, **characterised in that** the first driving element (19) and the additional driving element (20) are jointly disposed in a housing formed in the injection bridge (14).

5. Injection moulding unit according to claim 1, **characterised in that** the driving elements (19, 20), almost identical in terms of their diameters, are toothed wheels, which are preferably drivable by the driven wheels (24, 25) of the injection motor (E) or resp. rotary motor (R) via intermediate toothed wheels (23).

6. Injection moulding unit according to claim 5, **characterised in that** the two intermediate toothed wheels (23) are structurally identical and are mounted symmetrically relative to the injection axis (s-s) in a housing, which is formed in the injection bridge (14) and is symmetrical relative to the injection axis (s-s), when turned through roughly 180° relative to one another.

7. Injection moulding unit according to claim 1, **characterised in that** the means of linear movement (16a) of the injection unit (16) has a spindle head (16c), which penetrates into the element (16b) which is designed as a threaded sleeve and co-operates with the means of linear movement.

8. Injection moulding unit according to claim 7, **characterised in that** a rod (16e) of the means of linear movement (16a) carries the spindle head (16c) and is surrounded coaxially by a pipe (26), which is supported non-rotatably on the injection bridge (14), and which enters the supporting element (18) in each position of the injection unit (16).

9. Injection moulding unit according to claim 7, **characterised in that** the means of linear movement (16a) is surrounded coaxially by a pipe (26), which is supported non-rotatably on the injection bridge (14), and which enters the element (16b) which is designed as a threaded sleeve and co-operates with the means of linear movement (16a), wherein the axial forces which are produced are transmitted from the threaded sleeve via planet gears (16d) and the spindle head (16c) to an axial bearing element (40) and from the latter to the pipe (26) (Fig. 5).

10. Injection moulding unit according to claim 1, **characterised in that** an hydraulic piston/cylinder unit (D) is provided to attach the injection moulding unit to the mould (13), the cylinders (27) of which are axially displaceable on the stationary piston rods designed as cross beams (31), and which cylinders form a frame with the carrier block (10) and the supporting element (18).

11. Injection moulding unit according to claim 10, **characterised in that** the carrier block (10) is secured in the region of the front cylinder covers (32), and the supporting element (18) is secured in the region of the rear cylinder covers (33), and **in that** the injection bridge (14) is supported between the carrier block (10) and the supporting element (18) on the cylinders (27) of the piston/cylinder unit (D) in an axially displaceable and rotational manner.

## Revendications

1. Unité de moulage par injection pour une machine de moulage par injection pour la transformation de matières plastiques et d'autres masses plastifiables, comportant :
- un bloc de support (10) destiné à recevoir un cylindre de plastification (11),
- un moyen de transport (12), disposé dans le cylindre de plastification (11) le long d'un axe d'injection (s-s), pour l'injection de la masse plastifiable dans un moule (13),
- un pont d'injection (14) qui est déplaçable axialement le long de l'axe d'injection (s-s) et sur lequel le moyen de transport (12) est supporté par l'intermédiaire d'au moins un élément de palier (15), de manière à pouvoir tourner,
- une unité d'injection électromécanique (16) pour le déplacement axial du pont d'injection (14), un moyen de déplacement linéaire (17a) de l'unité d'injection (16) étant supporté, par l'intermédiaire d'au moins un élément de palier (17), sur le pont d'injection (14), de manière à pouvoir tourner,
- un élément d'appui (18) pour l'appui solidaire en rotation de l'élément (16b) qui coopère avec le moyen de déplacement linéaire (16a),
- un moteur d'injection (E) qui fait tourner le moyen de déplacement linéaire (16a) au moyen d'un premier élément d'entraînement (19) coaxial à ce moyen,
- un moteur de rotation électromécanique (R) qui fait tourner le moyen de transport (12), au moyen d'un autre élément d'entraînement (20), coaxial au moyen de transport ainsi qu'au premier élément d'entraînement (19),
- des éléments de transmission des forces, qui comportent au moins un élément de palier axial (21) pour la transmission du mouvement axial du moyen de déplacement linéaire (16a) sur le moyen de transport (12),
**caractérisée en ce que** l'élément de palier axial (21) est disposé, en tant qu'élément de transmission des forces, directement entre le premier élément d'entraînement (19) et l'autre élément d'entraînement (20).

2. Unité de moulage par injection selon la revendication 1, **caractérisée en ce que** l'élément de palier axial (21) est réalisé en tant que moyen de séparation pour le désaccouplement des mouvements de rotation des éléments d'entraînement (19, 20);

3. Unité de moulage par injection selon la revendication 1, **caractérisée en ce que** le moteur d'injection (E) et le moteur de rotation (R) sont de construction largement identique, et **en ce que** ces deux moteurs sont disposés symétriquement par rapport à un plan (e-e) qui passe par l'axe d'injection.

4. Unité de moulage par injection selon la revendication 1, **caractérisée en ce que** le premier élément d'entraînement (19) et l'autre élément d'entraînement (20) sont disposés ensemble dans un boîtier formé dans le pont d'injection (14).

5. Unité de moulage par injection selon la revendication 1, **caractérisée en ce que** les éléments d'entraînement (19, 20) approximativement identiques en ce qui concerne leur diamètre, sont des roues dentées qui peuvent être entraînées de préférence à travers des roues dentées intermédiaires (23) par les roues menées (24, 25) du moteur d'injection (E), respectivement du moteur de rotation (R).

6. Unité de moulage par injection selon la revendication 5, **caractérisée en ce que** les deux roues dentées intermédiaires (23) sont de construction identique et sont montées dans un boîtier formé dans le pont d'injection (14) et symétrique par rapport à l'axe d'injection (s-s), toumées l'une par rapport à l'autre d'environ 180°, symétriquement par rapport à l'axe d'injection (s-s).

7. Unité de moulage par injection selon la revendication 1, **caractérisée en ce que** le moyen de déplacement linéaire (16a) de l'unité d'injection (16) comporte une tête de broche (16c) qui pénètre dans l'élément (16b) réalisé en tant que douille filetée et coopérant avec le moyen de déplacement linéaire.

8. Unité de moulage par injection selon la revendication 7, **caractérisée en ce qu'**une barre (16e) du moyen de déplacement linéaire (16a) supporte la tête de broche (16c) et est entourée coaxialement par un tube (26), soutenu solidairement en rotation sur le pont d'injection (14), et qui pénètre dans l'élément d'appui (18), dans toute position de l'unité d'injection (16).

9. Unité de moulage par injection selon la revendication 7, **caractérisée en ce que** le moyen de déplacement linéaire (16a) est entouré coaxialement par un tube (26) soutenu solidairement en rotation sur le pont d'injection (14), qui pénètre dans l'élément (16b) réalisé en tant que douille filetée et coopérant avec le moyen de déplacement linéaire (16a), les forces axiales qui se produisent étant transmises, par l'intermédiaire d'organes planétaires (16d) et la tête de broche (16c), à un élément de palier axial (40) et de celui-ci au tube (26) (fig. 5).

10. Unité de moulage par injection selon la revendication 1, **caractérisée en ce qu'**il est prévu une unité hydraulique à cylindre et piston (D) pour l'application de l'unité de moulage par injection contre le moule (13), dont les cylindres (27) sont déplaçables axialement sur les tiges de piston stationnaires réalisées en tant que longerons (31) et forment un cadre avec le bloc de support (10) et l'élément d'appui (18).

11. Unité de moulage par injection selon la revendication 10, **caractérisée en ce que** le bloc de support (10) est fixé dans la zone du couvercle de cylindre avant (32) et l'élément d'appui (18) est fixé dans la zone du couvercle de cylindre arrière (33), et **en ce que** le pont d'injection (14) est soutenu de manière à être axialement déplaçable et à pouvoir tourner, entre le bloc de support (10) et l'élément d'appui (18), sur les cylindres (27) de l'unité à cylindre et piston (D).
